# EUROPEAN PATENT APPLICATION

(11) **EP 3 162 254 A1**
(43) Date of publication of application: **03.05.2017**
(21) Application number: 15192158.2
(22) Date of filing: 29.10.2015
(51) Int. Cl.: A47J 31/06, A47J 31/36

(54) **COFFEE BREWING APPARATUS**

(71) Applicant: Whirlpool EMEA S.p.A, 20016 Pero (MI) (IT)
(72) Inventor: GALIENI, Massimo, 60131 ANCONA (IT); RIDERELLI BELLI, Marcello, 60027 OSIMO (ANCONA) (IT)
(74) Representative: Monelli, Alberto

(57) **Abstract**

Coffee brewing apparatus comprising:
i) an external casing (10);
ii) a housing (2) suitable for lodging a coffee capsule or a coffee pod; the housing (2) being movable between an extracted position and an inserted position; in the extracted position the housing is at least in part extracted from the casing (10) and the capsule or the pod may be placed in the housing (2); in the inserted position the housing (2) being inserted in the casing (10) for brewing the coffee;
iii) an injector unit (3) of hot water for brewing the coffee; the injector unit (3) being movable between a proximal and a distal position relative to the housing (2) in the inserted position; in the proximal position the injector unit (3) can interact with the capsule or the pod placed in the housing (2);
iv) moving means (4) of the injector unit between the proximal position and the distal position.

The moving means (4) comprise a bistable leverage (40) which is stable in a first and a second position corresponding respectively with the proximal and the distal position of the injector unit (3).

## Description

The present invention relates to a coffee brewing apparatus.

Coffee brewing apparatus are known comprising:
i) a drawer suitable for lodging a coffee capsule or a coffee pod; the drawer being mobile between an extracted position in which the capsule or the pod may be placed in the drawer and an inserted position for brewing the coffee;
ii) an injector unit of hot water for brewing the coffee; the injector unit being movable between:
   - a raised position;
   - a lowered position in which it interacts with the capsule or the pod placed in the housing (which is in the inserted position);
iii) an electric motor or a fluidodynamic actuator for moving the injector unit between the raised position and the lowered position.

Drawbacks of this embodiment are the costs for realising the apparatus and also the considerable space for lodging the electrical motor and/or the fluidodynamic actuators.

In this context, the technical task underpinning the present invention is to optimise the components of the coffee brewing apparatus reducing costs, external dimensions and maintenance.

Further characteristics and advantages of the present invention will become more apparent from the following indicative, and hence non-limiting, description of a preferred, but not exclusive, embodiment of a coffee brewing apparatus as illustrated in the appended drawings, in which:
- figures 1-3 disclose, in perspective views, the apparatus for brewing coffee in three different configurations;

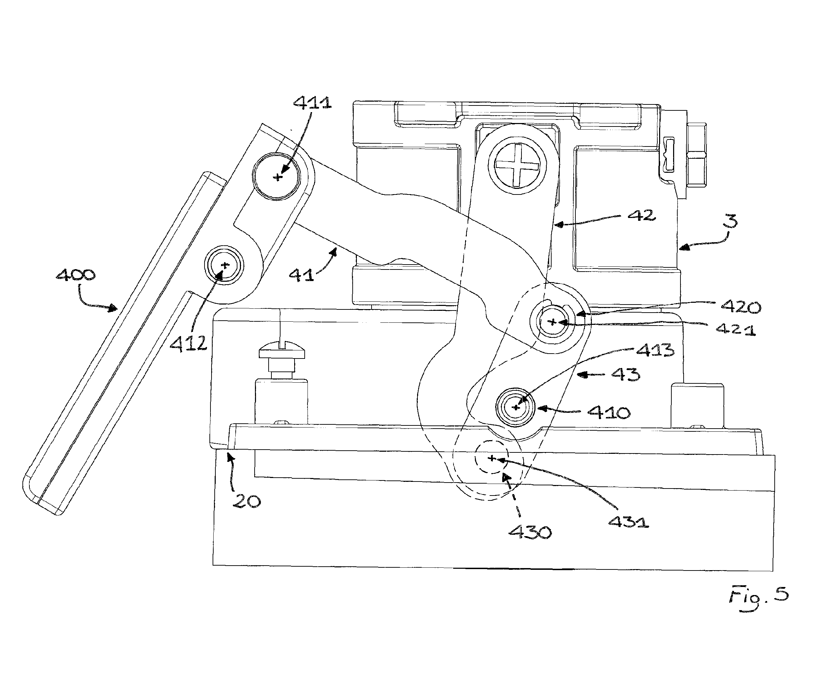

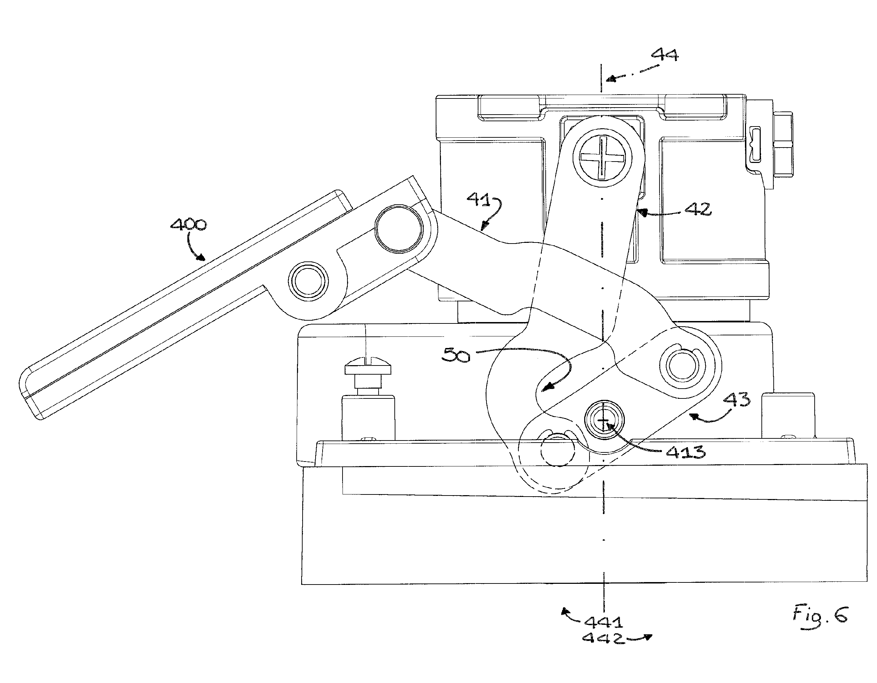

- figures 4-7 disclose lateral views of the apparatus in different configurations.

In the enclosed drawings the reference number 1 indicates a coffee brewing apparatus.

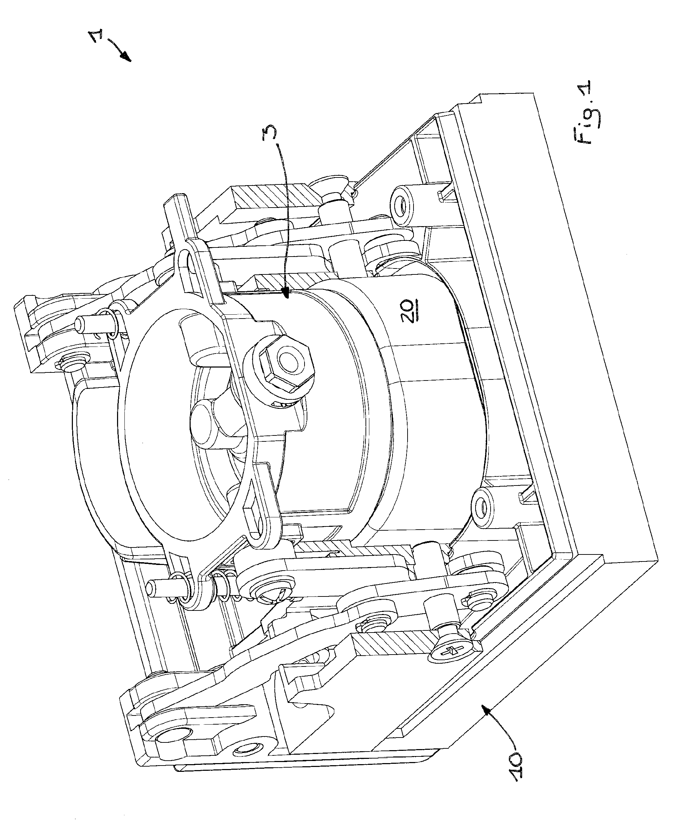

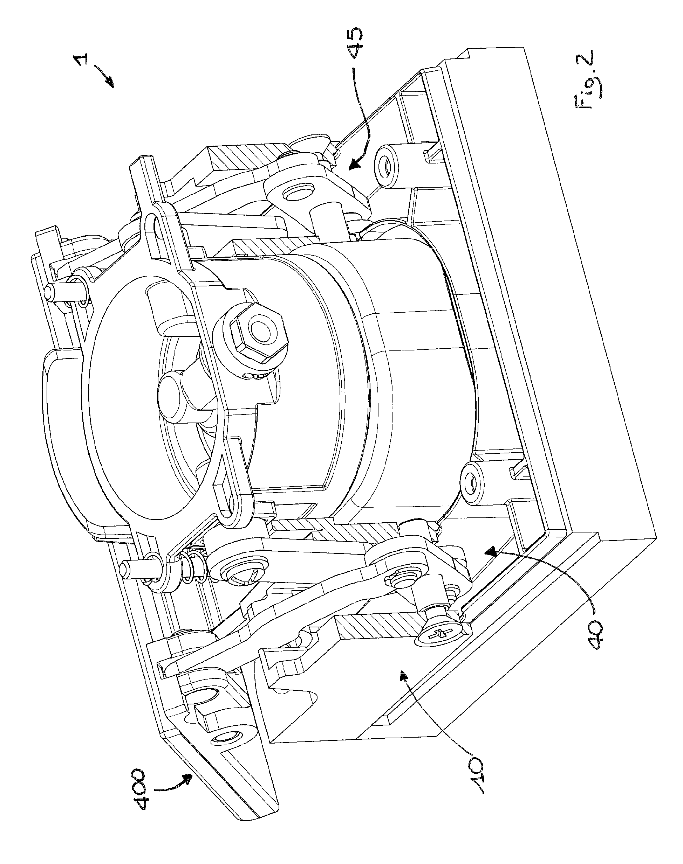

In particular the coffee brewing apparatus 1 comprises an external casing 10 (only a lower portion is visible for example in figures 1-3). The external casing 10, during use, is directly accessible by the user.

It plays also an aesthetic function. Also it protects and hides internal actuators.

The apparatus 1 comprises a housing 2 suitable for lodging a coffee capsule or a coffee pod.

The housing 2 is movable between an extracted position and an inserted position. In the extracted position the housing 2 is at least in part extracted from the casing 10. In the extracted position the capsule or the pod may be placed in the housing 2. In the inserted position (see the attached figures) the housing 2 is inserted in the casing 10 for brewing the coffee. Advantageously the apparatus 1 comprises a drawer 20 which defines the housing 2. Consequently a displacement of the drawer 20 causes a displacement of the housing 2. So in the extracted position of the housing 2 the drawer 20 is extracted from the casing 10. In the inserted position of the housing 2 the drawer 20 is inserted in the casing 10 (see the attached figures).

The apparatus 1 comprises an injector unit 3 suitable for introducing hot water for brewing the coffee. The water supplied from the injector unit 3 has a temperature greater than 70°C.

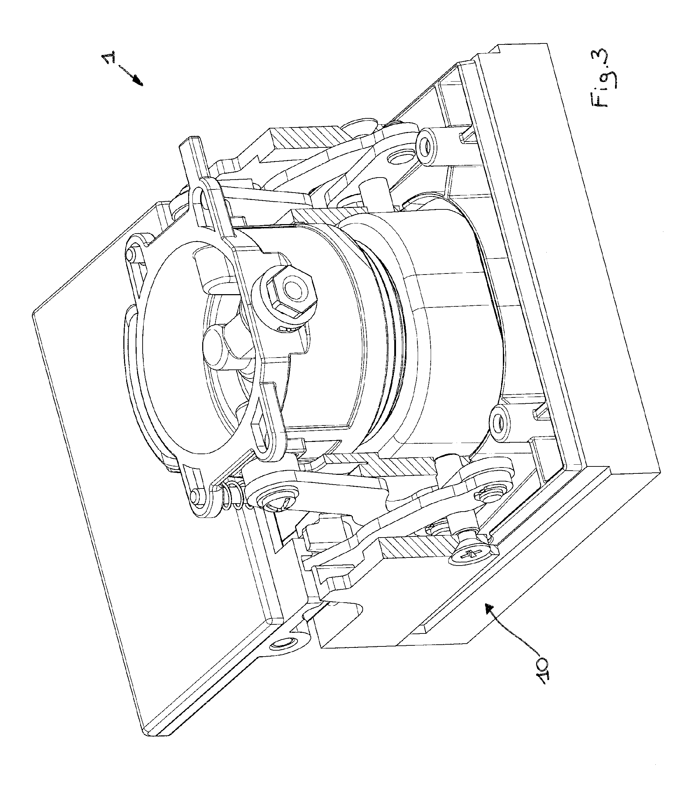

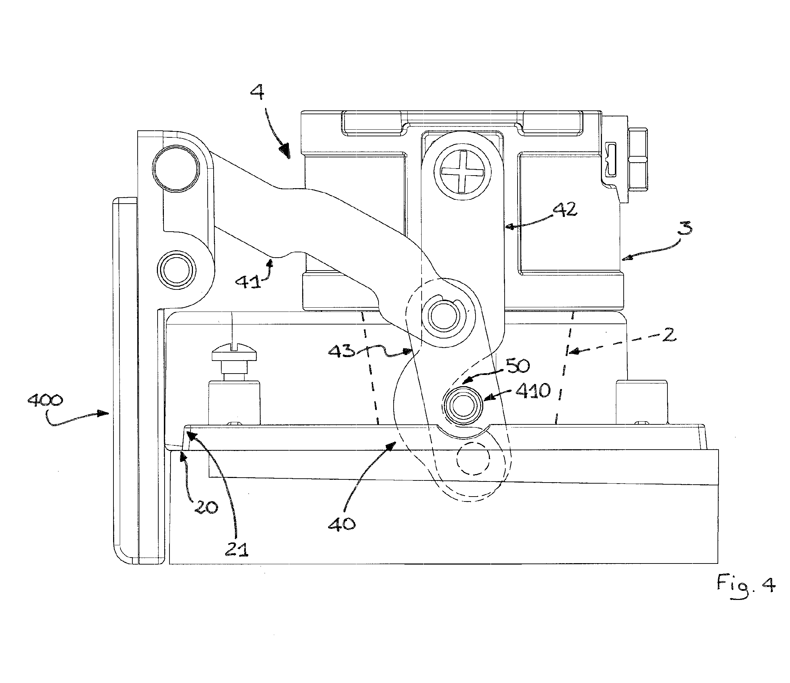

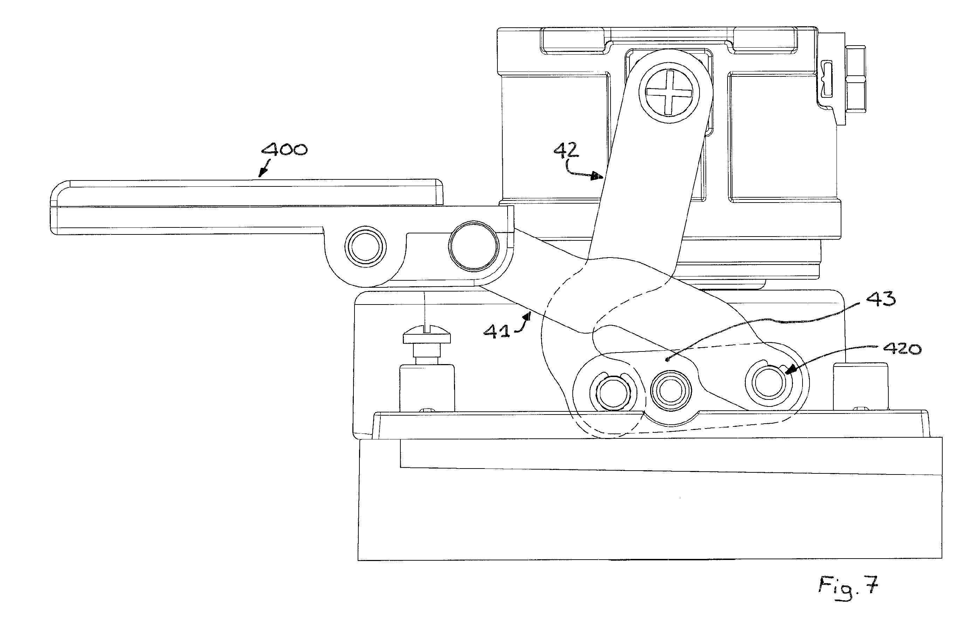

The injector unit 3 is movable between a proximal (figures 1, 4) and a distal (figures 3, 7) position relative to the housing 2 in the inserted position; in the proximal position the injector unit 3 can interact with the capsule or the pod placed in the housing 2.

Advantageously the injector unit 3 can comprise a punch that in the proximal position pierces the capsule.

The apparatus 1 comprises moving means 4 of the injector unit 3 between the proximal position and the distal position.

The moving means 4 comprises a bistable leverage 40. The bistable leverage 40 is stable in a first and a second position corresponding respectively with the proximal and the distal position of the injector unit 3. A position of dynamic equilibrium of the leverage 40 is intermediate between the first and the second position of the leverage 40.

For example the leverage is contained in an imaginary cuboid having dimensions 10x10x7 centimeters. The cuboid is interposed between the injector unit 3 and one lateral side of the apparatus.

The leverage 40 is actuated mechanically without electric or pneumatic actuators.

The apparatus comprises a door 400 that operates the leverage 40, the door 400 being mobile between an open and a closed position; in the open position the door 400 allowing the extraction of the housing 2 (or the drawer 20) from the casing 10.

In the open position of the door 400 (figures 3, 7) the injector unit 3 is in the distal position; in fact when the door 400 is open the housing 2 (the drawer 20) may be extracted at least partially from the casing 10. In the closed position (figures 1 and 4) of the door 400 the injector unit 3 is in the proximal position; in fact when the door 400 is closed, the housing 2 (the drawer 20) is inserted in the casing 10.

Preferably in the distal position (figures 3, 7), the injector unit 3 is raised while in the proximal position (figures 1, 4) the injector unit 3 is lowered. The leverage 40 comprises:
- a first body 41 advantageously hinged to the door 400;
- a second body 42 hinged directly or indirectly to the injector unit 3;
- a third body 43 which is intermediate between the first and the second body 41, 42;
- a first hinge 410 which connects directly or indirectly the third body 43 and one frame structure of the apparatus 1;
- a second hinge 420 which connects the first and the third body 41, 43;
- a third hinge 430 which connects the second and the third body 42, 43. The door 400 and the first body 41 are hinged each other around a first axis 411 of rotation. The door 400 and the frame structure are hinged around a second axis 412 of rotation; the first and the second axis 411, 412 of rotation are parallel and distinct.

The second axis 412 of rotation is fixed relative to a fixed portion of the casing 10. The axis 421 of rotation of the second hinge 420 and the axis of rotation 431 of the third hinge 430 of the apparatus 1 are movable during the movement of the leverage 40. The axis 413 of rotation of the first hinge 410 is fixed relative to a fixed portion of the casing 10.

The movement of the door 400 from the closed to the open position is accompanied by the movements of the first body 41 and of the second hinge 420 towards the inside of the casing 10.

An imaginary vertical plane 44 comprises (entirely) the axis 413 of rotation of the third body 43 and separates a first half-space 441 containing the door 400 (and/or the first body 41) and a second half-space 442. The first hinge 410 is interposed between the second and the third hinge 420, 430. In the proximal position of the injector unit 3, the third hinge 430 is in the second half-space 442.

In the proximal position of the injector unit 3, the third hinge 430 is under an horizontal plane which contains entirely the axis 413 of rotation of the first hinge 410 and the first axis 411 of rotation is above an horizontal plane which contains entirely the second axis 412 of rotation.

During the introduction of water in the coffee capsule or in the coffee pod the capsule or the pod exerts a force on the injector unit 3 and indirectly on the leverage 40 and (in view of the position of the third hinge 430) the leverage 40 reacts maintaining the door 400 in the closed position.

In the distal position of the injector unit 3 the third hinge 430 is in the first half-space 441.

In the position of dynamic equilibrium, the third hinge 430 is in correspondence of said imaginary vertical plane 44.

The second body 42 defines a cavity 50. In the proximal position of the injector unit 3 said cavity 50 houses the first hinge 410.

The first body 41, the second body 42 and the third body 43 are parallel to a common vertical plane.

In the preferred solution the third body 43 defines a straight rod.

The drawer 20 can be extracted from the casing 10 and inserted into the casing 10 horizontally. In the closed position the door 400 hides the drawer 20. The drawer 20 comprises a frontal handle 21. In the closed position the door 400 overlaps the handle 21.

The leverage 40 is a left side leverage. In other words it is interposed between the injector 3 unit and the left side of the apparatus.

The apparatus 1 comprises also an additional leverage 45 that is a right side leverage. In other words it is interposed between the injector 3 unit and the right side of the apparatus.

The injector unit 3 is interposed between the left side and the right side leverages.

Advantageously the right side leverage and the left side leverage are symmetrical.

They are actuated by the door 400.

The invention described brings many advantages.

Firstly, it permits to optimise the components of the coffee brewing apparatus. Also it permits to realise a mechanism for moving the apparatus which is extremely compact.

It shall be understood that the invention described above may be modified and adapted in several ways without departing from the scope of the inventive concept. Moreover, all the details of the invention may be substituted by other technically equivalent elements. In practice, the embodiments of the invention may be made from any material, and in any size, depending on requirements.

## Claims

1. Coffee brewing apparatus comprising:
i) an external casing (10);
ii) a housing (2) suitable for lodging a coffee capsule or a coffee pod; the housing (2) being movable between an extracted position and an inserted position; in the extracted position the housing is at least in part extracted from the casing (10) and the capsule or the pod may be placed in the housing (2); in the inserted position the housing (2) being inserted in the casing (10) for brewing the coffee;
iii) an injector unit (3) of hot water for brewing the coffee; the injector unit (3) being movable between a proximal and a distal position relative to the housing (2) in the inserted position; in the proximal position the injector unit (3) can interact with the capsule or the pod placed in the housing (2);
iv) moving means (4) of the injector unit between the proximal position and the distal position;
said moving means (4) comprising a bistable leverage (40) which is stable in a first and a second position corresponding respectively with the proximal and the distal position of the injector unit (3).

2. Apparatus according to claim 1, **characterised in that** a position of dynamic equilibrium of the leverage (40) is intermediate between the first and the second position of the leverage (40).

3. Apparatus according to claim 1 or 2, **characterised in that** said leverage (40) is contained in an imaginary cuboid having dimensions 10x10x7 centimeters, said cuboid being interposed between the injector unit (3) and one lateral side of the apparatus (1).

4. Apparatus according to any of the previous claims, **characterised in that** the leverage (40) is actuated mechanically without electric or pneumatic actuators.

5. Apparatus according to any of the previous claims, **characterised in that** in the distal position the injector unit (3) is raised while in the proximal position the injector unit (3) is lowered.

6. Apparatus according to any of the previous claims, **characterised in that** it comprises a door (400) that operates the leverage (40), the door (400) being mobile between an open and a closed position; in the open position the door (400) allowing extraction of the housing (2) from the external casing (10).

7. Apparatus according to claim 6, **characterised in that** in the open position of the door (400) the injector unit (3) is in the distal position; in the closed position of the door (400) the injector unit (3) being in the proximal position.

8. Apparatus according to claim 6 or 7, **characterised in that** the leverage (40) comprises:
- a first body (41) hinged to the to the door (400);
- a second body (42) hinged directly or indirectly to the injector unit (3);
- a third body (43) which is intermediate between the first and the second body (41, 42);
- a first hinge (410) which connects directly or indirectly the third body (43) and one frame structure of the apparatus (1);
- a second hinge (420) which connects the first and the third body (41, 43);
- a third hinge (430) which connects the second and the third body (42, 43); an imaginary vertical plane (44) comprises the axis (413) of rotation of the third body (43) and separates a first half-space (441) containing the door (400) and a second half-space (442), the first hinge (410) being interposed between the second and the third hinge (420, 430);
in the proximal position of the injector unit (3), the third hinge (430) being in the second half-space (442).

9. Apparatus according to claim 8, **characterised in that** the door (400) and the first body (41) are hinged each other around a first axis (411) of rotation; the door (400) and the frame structure being hinged around a second axis (412) of rotation; the first and the second axis (411, 412) of rotation being parallel and distinct; in the proximal position of the injector unit, the third hinge (430) is under an horizontal plane which contains entirely an axis (413) of rotation of the first hinge (410) and the first axis (411) of rotation is above an horizontal plane which contains entirely the second axis (412) of rotation.

10. Apparatus according to any claim from 1 to 7, **characterised in that** the leverage (40) comprises:
- a first body (41);
- a second body (42) hinged directly or indirectly to the injector unit (3);
- a third body (43) which is intermediate between the first and the second body (41, 42);
- a first hinge (410) which connects directly or indirectly the third body (43) and one frame structure of the apparatus (1);
- a second hinge (420) which connects the first and the third body (41, 43);
- a third hinge (430) which connects the second and the third body (42, 43); an imaginary vertical plane (44) comprises the axis (413) of rotation of the third body (43) and separates a first half-space (441) containing the first body (41) and a second half-space (442), the first hinge (410) being interposed between the second and the third hinge (420, 430);
in the proximal position of the injector unit (3), the third hinge (430) being in the second half-space (442).

11. Apparatus according to claim 8 or 9, or 10, **characterised in that**:
- in the distal position of the injector unit (3) the third hinge (430) is in the first half-space (441);
- in the position of dynamic equilibrium the third hinge (430) is in correspondence of said imaginary vertical plane (44).

12. Apparatus according to any claim from 8 to 11, **characterised in that** the second body (42) defines a cavity (50), in the proximal position of the injector unit (3) said cavity (50) housing the first hinge (410).

13. Apparatus according to any claim from 8 to 12, **characterised in that** the first body (41), the second body (42) and the third body (43) are parallel to a common vertical plane.

14. Apparatus according to any of the previous claims, **characterised in that** the leverage (40) is a left side leverage, the apparatus (1) comprising an additional leverage (45) that is a right side leverage; the injector unit (3) being interposed between the left side and the right side leverages.

15. Apparatus according to claim 14, **characterised in that** the right side leverage and the left side leverage are symmetrical.
